(19) Europäisches Patentamt
European Patent Office
Office européen des brevets

(11) Publication number: 0 239 770 B1

(12) EUROPEAN PATENT SPECIFICATION

(45) Date of publication of the patent specification: 06.09.89

(51) Int. Cl.[4]: C 23 F 11/12, E 21 B 41/02, E 21 B 37/06

(21) Application number: 87102356.0

(22) Date of filing: 19.02.87

(54) **Adducts of propargyl alcohol and their use as corrosion inhibitors in acidizing systems.**

(30) Priority: 28.02.86 US 834526

(43) Date of publication of application: 07.10.87 Bulletin 87/41

(45) Publication of the grant of the patent: 06.09.89 Bulletin 89/36

(84) Designated Contracting States: DE FR GB NL

(56) References cited:
EP-A- 0 111 959
EP-A- 0 130 006

(73) Proprietor: BASF Corporation, 9 Campus Drive, Parsippany, NJ 07054 (US)

(72) Inventor: Perry, Christine, 22335 Nixon, Riverview Michigan 48192 (US)
Inventor: Crema, Stefano Carlo, 1874 20th Street, Wyandotte Michigan 48192 (US)
Inventor: Davis, Pauls, 30027 White, Gibraltar Michigan 48173 (US)

(74) Representative: Höller, Klaus, Dr. et al, BASF Aktiengesellschaft Carl-Bosch-Strasse 38, D-6700 Ludwigshafen (DE)

EP 0 239 770 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to acidizing systems for oil and gas recovery containing propylene oxide and/or butylene oxide adducts of propargyl alcohol as corrosion inhibitors.

It is known to use propargyl alcohol as a corrosion inhibitor in acidizing systems used in oil and gas recovery. The propargyl alcohol is effective at preventing the corrosion of ferrous metal tank cars used to transport the highly corrosive acidizing systems which are used to break up deposits in oil and gas wells, and also protects ferrous metal pipe and equipment which comes into contact with the acidizing system at the site of the oil and gas well. Although propargyl alcohol is an effective corrosion inhibitor in acidizing systems, there is always a need to discover more effective corrosion inhibitors (particularly those effective at higher use temperatures such as 80°C and above) which are more economical to use.

The invention relates to an acidizing system comprising:

(a) a acidizing solution; and

(b) propargyl alcohol adducts having the following structural formula I:

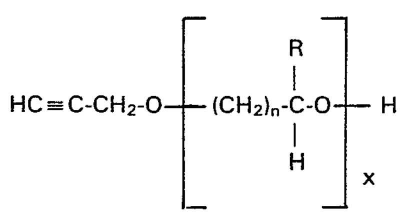

(I)

where n = 1 or 3 and R = H if n = 3 and R = $CH_3$ if n = 1; and x = 1 to 5, preferably 1 to 2. A surfactant and a $C_3$-$C_{12}$ aliphatic alcohol are also preferably used as components of the acidizing system. The propargyl alcohol adducts are more effective as corrosion inhibitors in the acidizing system than propargyl alcohol.

The invention also relates to a process for inhibiting the corrosion of ferrous metals from the effects of acids which comprises treating the ferrous metal surface with an acidizing system containing the propargyl alcohol adducts. It further relates to the use of the propargyl alcohol adducts of general formula I as corrosion inhibitors for acidizing systems and to the use of said acidizing systems in oil and gas recovery.

As was previously indicated, the propargyl alcohol adducts have the following structural formula I:

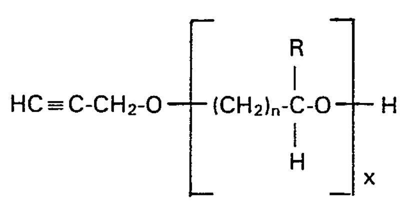

(I)

where n = 1 or 3 and R = H if n = 3 and R = $CH_3$ if n = 1; and x = 1-5.

These compositions are prepared according to well known methods. Propargyl alcohol is preferably reacted with propylene oxide, butylene oxide, or mixtures thereof in the presence of an oxyalkylation catalyst. It is also contemplated that other lower alkylene oxides such as ethylene oxide may be included, provided they are used in amounts which do not significantly reduce the effectiveness of the corrosion inhibitor. Examples of such catalysts are tertiary amines such as pyridine, triethylamine, and the like; alkali metal such as sodium, potassium, and lithium; and alkali metal hydroxides such as sodium hydroxide, potassium hydoxide, lithium hydroxide, and the like. The amount of oxyalkylation catalyst employed is generally within the range of about 0.001 part to about 1.0 part by weight of catalyst per 100 parts by weight of propargyl alcohol. For those who need more details regarding the preparation of the subject compositions, such details are disclosed in *Encyclopedia of Chemical Technology,* vol. 7, pp. 257-262, published by Interscience Publishers, Inc., (1951).

To prepare an acidizing system, the propargyl alcohol adducts are combined with an acidizing solution. Generally, the acidizing solution will contain an acid such as hydrochloric acid, phosphoric acid, or sulfuric acid in a concentration of about 3 to about 30 percent by volume based upon the total volume of the acidizing solution which will contain water in addition to the acid. The propargyl alcohol adduct is used in an amount effective to inhibit the corrosion of the ferrous metal, generally in amount of about 0.1 part by weight to about 10.0 parts by weight based upon the total weight of the acidizing system.

As was mentioned, a surfactant is preferably used in the acidizing system along with a $C_3$-$C_{12}$ aliphatic alcohol. Although many anionic and nonionic surfactants, and mixtures thereof, can be used in the acidizing systems, particularly useful ones are described in GB-A-2 141 731. These surfactants are oxyalkylated alcohols or phenols which may or may not be terminally esterified thus potentially forming mixtures of mono- and diesters. In the esterified form, the surfactant is an anionic detergent and in the nonesterified form can be considered a nonionic detergent wherein the hydrophilic or water soluble moiety is a terminal ethylene oxide chain. Thus, the particularly preferred surfactants of the present invention are characterized by the chemical formula II:

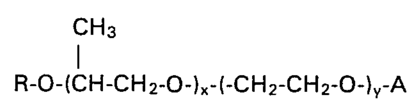

(II)

where R is an alkyl or alkyl-aryl radical of about $C_6$ to $C_{20}$; A is a radical selected from the group consisting of

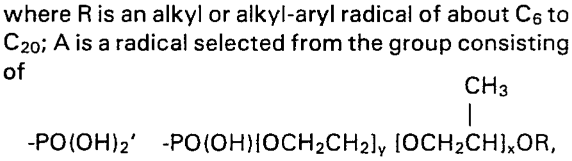

wherein R has the same meaning as above, x is a number corresponding to the degree of propoxylation and y is a number corresponding to the degree of ethoxylation, hydrogen, $-SO_3H$ and $-SO_2H$.

In the broadest sense, R is any hydroxylated

organic substitutent that after oxyalkylation represents or contributes to the necessary hydrophobic character at one end of the resulting surfactant molecule. Commercially, fatty alcohols and alkyl phenols are frequently employed as starting materials for the subsequent oxyalkylation. In principle, the oxyalkylation can involve alkylene oxides other than propylene oxide and ethylene oxide provided the terminal sequence is predominantly ethylene oxide for water solubility or hydrophilic character. Preferably, the oxyalkylation is a block polymer of propylene oxide followed by ethylene oxide. However, in addition to the incorporation of other alkylene oxides, particularly near the starting alcohol moiety, one or more moles of ethylene oxide can be readily and advantageously employed initially to promote the oxyalkylation reaction as well known in the art. Thus, the term block polymer when used to describe the polyether moiety of the surfactant molecule is referring generally to the presence of a terminal ethylene oxide chain and the reference to block propylene oxide/ethylene oxide also includes other alkylene oxides in the propylene oxide portion including initiation of the oxyalkylation reaction with an ethylene oxide.

The presence and degree of the terminal esterification and the selection of the acid or equivalent used to esterify the ethylene oxide chain will depend on the particular end use of the surfactant and acidic surfactant/alcohol solution. If high surface absorption is desired, then the sulfate ester and/or phosphate ester may be appropriate. If no surface absorption is desired, then the nonesterified nonionic form of the surfactant may be preferred. In such cases, the relative degree of ethoxylation can be increased to ensure water solubility. Similarly, the viscosity, solubility and absorptivity of the resulting acidic solution can be adjusted by varying the degree of oxyalkylation and esterification of the surfactant. Thus, it is envisioned that for example in enhanced oil recovery applications, such as a $CO_2$ flood, the nonionic (nonesterified) surfactant would be preferred (minimum adsorption), while for well stimulation and cleaning, the phosphate ester seems to be the best approach. Selected other end uses may dictate the employment of the sulphate ester. The actual method of esterification can be by any technique well known in the art.

The particularly preferred phosphate ester surfactants useful in the present invention are the phosphate esters of the oxyalkylated fatty alcohols and the like as described in US-A-3 629 127, herein incorporated by reference as descriptive thereof.

As was mentioned, generally any $C_3$-$C_{12}$ alcohol can be used in the acidizing system along with the surfactant. However, it is preferable to use a mixture consisting of a branched $C_3$-$C_6$ alcohol, preferably isopropanol, and a branched $C_7$-$C_{10}$ alcohol, preferably isoctyl alcohol. The weight ratio of the $C_3$-$C_6$ alcohol to $C_7$-$C_{10}$ alcohol may vary over wide ranges, but generally is from 0.1 : 1 to 10.0 : 1.

The amount of $C_3$-$C_{12}$ aliphatic alcohol used is an amount effective to dissolve the deposits in the oil and gas wells. Generally, this amount will be from 0.5 part to 10 parts by weight based upon the total weight of the acidizing system. The weight ratio of surfactant to alcohol used may also vary over wide ranges, but is generally from about 10 : 1 to 1 : 10.

Optional ingredients such as emulsion preventors and silt suspenders may also be added to the acidizing system.

The examples which follow will illustrate in more detail how the prepare and use the propargyl alcohol adducts described herein. The examples will also illustrate the advantage of using these adducts instead of propargyl alcohol.

Example 1 illustrates how to prepare a propargyl alcohol adduct. Example 2 illustrates the preparation of a cruder product.

*Example 1*

A propargyl alcohol adduct (PAA-1) was prepared by reacting propargyl alcohol with propylene oxide in a mole ratio of propargyl alcohol to propylene oxide of about 1 : 1 in the presence of 1.0 weight percent of hindered tertiary amine catalyst, based upon the weight of the propargyl alcohol, at a temperature of 80°C. The product was purified by vacuum distillation.

*Example 2*

Example 1 was repeated except the end product was not purified. This crude product (PAA-2) contains only about 50 percent by weight of the propargyl alcohol adduct identified in Example 1.

The compounds prepared in Examples 1 and 2 were then tested to determine their effectiveness in inhibiting the corrosion of steel in an aqueous hydrochlorid acid medium. A series of tests was run in which a steel coupon, which had been previously cleaned, dried, and weighed, was suspended for 16 hours in a 15 percent aqueous hydrochloric acid solution containing 0.05, 0.100, 0.200, 0.300, and 0.400 percent by weight of the compounds of Examples 1 and 2. The temperature of the solution was maintained at 82°C ± 5°C.

As controls, the same concentrations of propargyl alcohol (PA) were placed in the same acid solution in separate containers and kept at the same temperature. The coupons were then washed, dried, and weighed to determine the corrosion rate by the amount of metal dissolved by the acid.

The results are set forth in the Table which follows. The corrosion rates are the numbers by percent in the columns and rows of the Table.

TABLE I

| Concentration of Active Ingredient | Corrosion Rate | | % Change in Corrosion Rate |
|---|---|---|---|
| | PA | PAA-1 | |
| 0.05 | 3.78 | 5.67 | +50 |
| 0.1 | 1.82 | 1.41 | —23 |
| 0.2 | 1.02 | 0.55 | —46 |
| 0.3 | 1.00 | 0.67 | —33 |
| 0.4 | 0.68 | 0.46 | —32 |

Table I shows that at concentrations of 0.1 and greater, the propargyl alcohol adducts show improved corrosion protection when compared to propargyl alcohol.

Table II which follows shows the results for a similar experiment except that the crude propargyl alcohol adduct (PAA-2) was used. The results are as follows:

TABLE II

| Concentration of Active Ingredient | Corrosion Rate PA | PAA-2 | % Change in Corrosion Rate |
|---|---|---|---|
| 0.05 | 5.05 | 8.57 | +52 |
| 0.1 | 1.41 | 1.13 | —20 |
| 0.2 | 0.55 | 0.31 | —44 |
| 0.3 | 0.67 | 0.45 | —33 |
| 0.4 | 0.46 | 0.31 | —33 |

The data in Table II indicate that even a crude propargyl alcohol adduct shows improved corrosion inhibiting ability at concentrations of 0.1 or greater when compared to propargyl alcohol.

## Claims

1. An acidizing system comprising:
(a) a acidizing solution; and
(b) an effective corrosion inhibiting amount of a propargyl alcohol adduct having the following structural formula I:

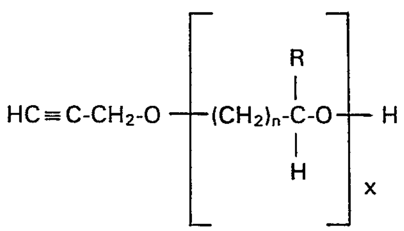 (I)

where $n = 1$ or 3 and $R = H$ if $n = 3$ and $R = CH_3$ if $n = 1$; and $x = 1$ to 5.

2. The acidizing system of claim 1 wherein the amounts of propargyl alcohol adduct used is from 0.1 part by weight to 10 parts by weight based upon the total weight of the acidizing system.

3. The acidizing system of claims 2 or 3 wherein an effective dissolving amount of a $C_3$-$C_{10}$ alcohol is used in said acidizing system along with a surfactant such that the weight ratio of alcohol to surfactant is from 10 : 1 to 1 : 10.

4. The acidizing system of any one of claims 1 to 3, wherein $x = 1$ or 2.

5. The use of a propargyl alcohol adduct of formula I of claim 1 as corrosion inhibitor for acidizing systems.

6. The use of an acidizing system of any one of claims 1 to 4 in oil and gas recovery.

7. A process for inhibiting the corrosion of ferrous metals from the effects of acids which comprises treating the ferrous metals surface with the acidizing system of any one of claims 1 to 4.

## Patentansprüche

1. Saures Medium bestehend aus:
(a) einer sauren Lösung und
(b) einer wirksamen korrosionsinhibierenden Menge einer Additionsverbindung von Propargylalkohol mit der folgenden Strukturformel I:

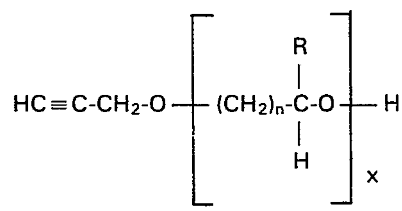 (I)

worin $n = 1$ oder 3 und $R = H$ für $n = 3$ und $R = CH_3$ für $n = 1$ und $x = 1$ bis 5 bedeuten.

2. Saures Medium nach Anspruch 1, dadurch gekennzeichnet daß die eingesetzte Menge der Additionsverbindung von Propargylalkohol von 0,1 Gewichtsteil bis 10 Gewichtsteile, bezogen auf das Gesamtgewicht des sauren Mediums, beträgt.

3. Saures Medium nach Anspruch 2 oder 3, dadurch gekennzeichnet, daß die wirksame, auflösende Menge des $C_3$-$C_{10}$-Alkohols, die wird, in besagtem sauren medium zusammen mit einem Tensid verwendet so bemessen ist, daß das Gewichtsverhältnis von Alkohol zu Tensid von 10 : 1 bis 1 : 10 beträgt.

4. Saures Medium nach einem der Ansprüche 1 bis 3, dadurch gekennzeichnet, daß $x = 1$ oder 2 bedeutet.

5. Verwendung einer Additionsverbindung von Propargylalkohol der Formel I nach Anspruch 1 als Korrosionsinhibitor für saure Medium.

6. Verwendung eines sauren Mediums nach einem der Ansprüche 1 bis 4 in der Erdöl- und Erdgasgewinnung.

7. Verfahren zur Korrosionsinhibierung von Eisenmetallen durch Einwirkung von Säuren, dadurch gekennzeichnet, daß die Oberfläche der Eisenmetalle mit dem sauren Medium nach einem der Ansprüche 1 bis 4 behandelt wird.

## Revendications

1. Système acidifiant comprenant:
(a) une solution acidifiante; et
(b) une quantité inhibitrice de la corrosion efficace d'un produit d'addition de l'alcool propargylique ayant la formule développée suivant I:

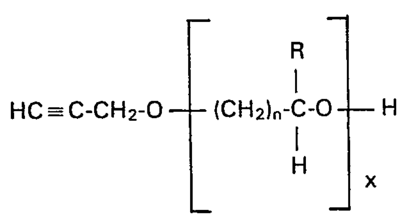 (I)

dans laquelle n est 1 ou 3 et R est H si $n = 3$ et R est $CH_3$ si $n = 1$, et $x = 1$ à 5.

2. Système acidifiant selon la revendication 1, dans lequel la quantité de produit d'addition de l'alcool propargylique utilisée est de 0,1 partie en poids à 10 parties en poids par rapport au poids total du système acidifiant.

3. Système acidifiant selon les revendications 1 ou 2, dans lequel une quantité dissolvante efficace d'un alcool en $C_3$-$C_{10}$ est utilisée dans ledit système acidifiant ainsi qu'un surfactif de telle sorte que le rapport pondéral de l'alcool au surfactif soit de 10 : 1 à 1 : 10.

4. Système acidifiant selon l'une quelconque des revendications 1 à 3, dans lequel x = 1 ou 2.

5. Utilisation d'un produit d'addition de l'alcool propargylique de formule I de la revendication 1, comme inhibiteur de corrosion pour des systèmes acidifiants.

6. Utilisation d'un système acidifiant selon l'une quelconque des revendications 1 à 4 dans la récupération du pétrole et des gaz.

7. Procédé pour inhiber la corrosion des métaux ferreux provoquée par des acides, qui consiste à traiter la surface des métaux ferreux par le système acidifiant selon l'une quelconque des revendications 1 à 4.